(19) Europäisches Patentamt
European Patent Office
Office européen des brevets

(11) **EP 4 545 940 A1**

(12) **EUROPEAN PATENT APPLICATION**

(43) Date of publication:
**30.04.2025 Bulletin 2025/18**

(21) Application number: **23205879.2**

(22) Date of filing: **25.10.2023**

(51) International Patent Classification (IPC):
**G01N 17/00** (2006.01)   **G01N 17/02** (2006.01)
**G01N 27/26** (2006.01)

(52) Cooperative Patent Classification (CPC):
**G01N 17/006; G01N 17/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB Schweiz AG**
**5400 Baden (CH)**

(72) Inventors:
- **Wawrzola, Grzegorz Piotr**
  **25-319 Kielce (PL)**
- **Pypec, Stefan**
  **31-215 Krakow (PL)**
- **Laitinen, Matti**
  **02400 Kirkkonummi (FI)**

(74) Representative: **Wroblewski, Marcin Jan**
**Fert, Jakubiak vel Wojtczak**
**Wróblewski rzecznicy patentowi**
**Sp. P. / ul. Gdanska 126/A103**
**90-520 Lodz (PL)**

(54) **AN ATMOSPHERIC CORROSION SENSOR**

(57) An atmospheric corrosion sensor (1) for detecting corrosion of electrical equipment comprising at least two atmospheric corrosion sensing structures (Rs1, Rs2, Rs3) placed on at least one insulated corrosion sensor substrate wherein said corrosion sensing structures (Rs1, Rs2, Rs3) are accessible to corrosion atmosphere.

Said atmospheric corrosion sensing structures (Rs1, Rs2, Rs3) have the same spatial dimensions and each of said atmospheric corrosion sensing structures (Rs1, Rs2, Rs3) comprises different composition of corrodible material.

**EP 4 545 940 A1**

**EP 4 545 940 A1**

**Description**

**Technical field of the invention**

The object of the invention is an atmospheric corrosion sensor for detecting corrosion of electrical equipment due to corrosive gas. The sensor can be used in various types of electrical equipment which are susceptible to atmospheric corrosion. Especially the sensor is intended for electrical devices which are used in the most aggressive corrosive atmospheres which can be found in power distribution industry, chemical production plants, aircrafts, automotive manufacture, transportation infrastructure, off-shore structures and the construction industry.

**Background art**

Atmospheric corrosion is an electrochemical process of degradation of materials exposed to corrosive atmosphere. The susceptibility of materials to atmospheric corrosion depends on many factors, from which the most important are: type and structure of the material, presence of water, composition of the atmosphere, humidity, ambient temperature. Especially vulnerable to atmospheric corrosion are metals and their alloys, such as copper, aluminium, iron, zinc, nickel, silver, steel, brass and many others. The most aggressive corrosive atmospheres can be found in power distribution industry, chemical production plants, aircraft, automotive manufacture, transportation infrastructure, off-shore structures and the construction industry. These atmospheres are usually rich in many corrosive species, such as for example chlorides, phosphates, nitrates, sulphates, carbonates, sulphur oxides, nitrogen oxides, carbon dioxide, hydrogen sulphide, which together with moisture and oxygen can lead to severe metal corrosion.

Different electronic and electrical equipment is used in each of these environments and, since they consist of various metals and alloys, they are particularly prone to damage due to atmospheric corrosion. Growing complexity and demand on reliability of electronic devices and components make the atmospheric corrosion become an important problem. Therefore, atmospheric corrosion monitoring can help to predict the useful lifetime of electronic and electrical devices in particular environment and to plan service and maintenance actions, in order, to prevent from critical failures and equipment downtimes.

Many corrosion sensors use metal films to detect atmospheric corrosion. Corrosive species in the atmosphere react with the surface of metal causing the corrosion to advance in depth of the film so the metal is consumed, and electrical resistance increases until the continuity is broken. The time needed to break the metal film depends on its thickness and number of environmental conditions, like concentration of corrosive species in the atmosphere, humidity and temperature. In stable environmental condition the thicker the film, the longer it takes to break the electrical continuity.

In the state of the art, corrosion sensors are known. For example, document US8723534B2 reveals a corrosion sensor comprising a plurality of metal strips having different thicknesses. A first metal strip with the least thickness is first employed to provide sensitive corrosion detection. After an exposed portion of the first metal strip is consumed, a second metal strip having a second least thickness can be employed to provide continued sensitive corrosion detection employing a remaining un-corroded portion of the second metal strip. The plurality of metal strips can be sequentially employed as exposed portions of thinner metal strips become unusable through complete corrosion and un-corroded exposed portions of thicker metal strips become thin enough to provide sensitive corrosion detection.

A patent US8390306B2 discloses an atmospheric corrosion sensor. Its corrosion sensor is based on a metal film resistor. Corrosion sensor comprises a set of multiple metal films, with progressively increasing widths. Metal films are seated on a non-conduction material. The corrosion sensor operates such that the resistance of each metal film is measured. Its resistance depends on its spatial dimensions. Therefore, an atmospheric corrosion influences the metal film spatial dimensions and changes its resistance. The resistance changes due to a reduced conduction path as the width of the metal film is converted from a metal to a nonconductive oxide due to corrosion. As the corrosive gases in the atmospheric environment, in which the sensor operates, attack the metal of the metal film and transform it to a nonconductive oxide, the width is reduced thus increasing the resistance of the metal film. The operation of the corrosion sensor is optimized to work on a relatively low corrosion rate with corrosion product formed at a rate of about 30 nanometers per month or lower. The corrosion sensor is designed to be used in interiors. Hence, when a certain level of corrosion is detected via the sensor response, the atmospheric environment of the interior can be correspondingly regulated. In this solution, also reference sensor element can be used, which are not substantially susceptible to corrosion caused by the atmospheric environment.

A patent application US20230134944A1 reveals a corrosive environment monitoring device, comprising a laminated body including an insulation plate, a base metal thin film, and a sensing metal thin film, the base metal thin film being formed on the insulation plate and being resistant to corrosion by a corrosive substance, the sensing metal thin film being formed on the base metal thin film and being susceptible to corrosion by the corrosive substance. The corrosive environment monitoring further comprises a case containing the laminated body, including an opening portion in a side surface direction, and forming a gas passage for the corrosive substance in the inside, wherein the sensing metal thin film is formed in a partial area on the base metal thin film.

To assess the corrosion rate with electronic equipment, multiple methods are used, however four of them seem to be the most popular.

One of the methods is based on optical assessment of a corrodible surface affected by a corrosion process. It can be based on photoelements such as photodiode and phototransistor. However, these simple solutions are very sensitive to dirt, dust and the light condition (i.e., daylight vs artificial lighting), while more advanced solutions based on picture recognition (a camera and a picture processing unit) are not widely used as size and cost of this solution might be very high, which limits the use only for protection of most important and valuable assets.

Another method is based on electrochemical corrosion measurement, where electrical potential, anodic and cathodic currents of very small value are monitored. This method requires the use of specific electrodes and extremely accurate monitoring circuit, which increases cost and size of the solution.

Yet another method is based on continuous monitoring of some physical parameters of corrosion sensor, made of a corrodible material, to assess progress of corrosion process - for example monitoring of a resistance change of a metal strip. In the continuous method a single metal film of predefined thickness is used, and its electrical resistance is measured so the corrosion progress can be monitored continuously in time. Sometimes another metal film protected from corrosion is also used to compensate against temperature changes and other environmental factors not related directly to corrosion. This method requires a measurement equipment of good quality to detect small changes of parameter values, and is sensitive for environmental condition, such as temperature and humidity. Additionally, to detect trends within the device (when a standalone solution not connected to a more advanced system is used), it might be necessary to store measurement data over time, and to compare them. All these requirements can increase cost of the measurement device able to meet the demanded functionality with reasonable sensitivity. As a result, the total cost of the solutions and its size still might be too high to allow its placement as additional functional block in many products.

The fourth one, called discrete method, is based on detection of the moment when the corrosion process causes breaking of the continuity of the corrosion sensor. The detection circuit is extremely low cost and small size, however the disadvantage of using that solution is limited information about the corrosion progress - it can only indicate reaching a threshold point where the continuity is broken, and it is not possible to provide information about the progress of a corrosion over time.

To enhance the capabilities of fourth solution, it is possible to use multiple sensing elements based on detection of connection loss. However, it is crucial to ensure that they are damaged by the corrosion process at different time, so that information about connection loss in consequent sensing elements can be obtained and basis on the sequence, the corrosion progress of protected equipment might be assessed. The disadvantage of the discrete method is the necessity of using metal films of different thickness, which increases manufacturing cost and limits the choice of available technologies.

The object of the present invention is the provision of a low-cost corrosion sensor providing comprehensive information on the atmospheric corrosion rate of the electrical equipment operating in the corrosive environment.

**Summary of the invention**

The object is achieved with the device according to claim 1.

An atmospheric corrosion sensor for detecting corrosion of electrical equipment comprising at least two atmospheric corrosion sensing structures placed on at least one insulated corrosion sensor substrate wherein said corrosion sensing structures are accessible to corrosion atmosphere. Said atmospheric corrosion sensing structures have the same spatial dimensions and each of said atmospheric corrosion sensing structures comprises a different composition of corrodible material.

As a result of corrosion process, the continuity of a corrosion sensing structure will be damaged after some time, which depends on the composition of the corrodible material of the corrosion sensing structure. As the composition of the corrodible material in each corrosion sensing structure is different, the time when the continuity is broken also differs. By monitoring the state of all of the corrosion sensing structure it is possible to detect how many of them have already been affected by the corrosion and basis on this information, to assess corrosion rate which have affected the equipment monitored with the sensor.

In one of the preferred implementations of the invention, each of atmospheric corrosion sensing structure comprise different concentration of the same chemical composition of corrodible material.

The atmospheric corrosion sensor comprises at least two corrosion sensing structures of the same spatial dimensions, but they differ by concentration of the corrodible material within the same volume. Because of that difference, the time necessary to create discontinuity in each of the corrosion sensing structures due to corrosion process is different. As multiple corrosion sensing structures are used, each of them will corrode (lose its continuity - lose its internal connection) in different time. By assessing the state of each of these corrosion sensing structures (that means by knowing if internal connection exists or not) it is possible to assess severity of corrosive environment in which atmospheric corrosion sensor is operating. This information might be furtherly used to estimate corrosion rate of the assets working in the same environment as the atmospheric corrosion sensor, and thus allow to predict when it reaches end of operational life due to corrosion process, plan maintenance actions in advance and reduce cost of unplanned service actions due to unexpected failure.

In another preferred implementation of the invention each of atmospheric corrosion sensing structures comprises a different chemical composition of corrodible material.

The atmospheric corrosion sensor comprises at least two corrosion sensing structures, each of them contain a corrodible material of a different chemical composition i.e., different metal or different alloy. As a result of corrosion process, the continuity of a single corrosion sensing structure will be damaged after some time, which depends on the chemical composition of the corrodible material of the corrosion sensing structure. As the corrodible material type in each of the corrosion sensing structure is different, the time when its continuity is broken also differs. By monitoring the state of all the corrosion sensing structures, it is possible to detect how many of them have already been affected by the corrosion and basis on this information, to assess corrosion rate which have affected the equipment monitored with the sensor.

Preferably, corrodible material is corrodible metal or metal alloy, in particular copper, aluminum, iron, zinc, nickel, silver, steel, or brass.

Preferably, corrosion sensing structures are made in the form of film.

Preferably, each of the corrosion sensing structure is connected in series to a resistive component respectively. In this case the resistive component is embedded as a part of atmospheric corrosion sensors.

The object of the invention is also a set of said atmospheric corrosion sensors as well as an electrical equipment for corrosion detection comprising at least one atmospheric corrosion sensor or at least one set of atmospheric corrosion sensors.

## Advantages of the Invention

The atmospheric corrosion sensor allows for setting up multiple threshold levels depending on requirements in a single sensor comprising multiple corrosion sensing structures. Due to the different chemical composition of the corrodible material, the time necessary for breaking continuity of each corrosion sensing structure is different. The atmospheric corrosion allows to assess when the corrosion rate reaches some threshold values indicated by the moment of internal connection loss of the sensing elements.

The atmospheric corrosion sensor according to the invention allows to estimate corrosion rate of the electronic and electrical devices working in the same environment as the corrosion sensor.

Furthermore, the atmospheric corrosion sensor according to the invention allows for predicting the useful lifetime of electronic and electrical devices in particular environment and to plan, in advance, service and maintenance actions, in order, to prevent from critical failures and equipment downtimes and to reduce cost of unplanned service actions due to unexpected failure.

Moreover, the atmospheric corrosion sensor according to the invention is small-size and easy to implement in monitored electronic and electrical devices as well low-cost in production.

## Brief description of drawings

The object of the invention is shown in embodiments in a drawing, in which:

Fig. 1    presents the atmospheric corrosion sensor according to the invention implemented as a part of a resistor divider connected to high potential;

Fig. 2    presents the atmospheric corrosion sensor according to the invention implemented as a part of a resistor divider connected to low potential;

Fig. 3    presents the atmospheric corrosion sensor according to the invention placed between outputs of high state and inputs with pull-down;

Fig. 4    presents the atmospheric corrosion sensor according to the invention placed between outputs of low state and inputs with pull-up;

Fig. 5    presents the atmospheric corrosion sensor according to the invention placed between single output of high state and inputs with pull-down;

Fig. 6    presents the atmospheric corrosion sensor according to the invention placed between single output of low state and inputs with pull-up;

Fig. 7     presents the atmospheric corrosion sensor according to the invention placed between high potential and inputs with pull-down;

Fig. 8     presents the atmospheric corrosion sensor according to the invention placed between low potential and inputs with pull-up;

Fig. 9     presents an oscillator feedback network comprising atmospheric corrosion sensors according the invention;

Fig. 10    presents an example of RC oscillator based on a Schmitt inverter comprising atmospheric corrosion sensor according the invention;

Fig. 11    presents an example output frequency change due to corrosion of corrosion sensing structures of the atmospheric corrosion sensor according to the invetion, incorporated in the RC oscillator based on a Schmitt inverter;

Fig. 12    presents an example of Colpitts oscillator based on a logic inverter comprising atmospheric corrosion sensor according to the invention;

Fig. 13    presents an example output frequency change due to corrosion of corrosion sensing structures of the atmospheric corrosion sensor according to the invetion, incorporated in the Colpitts oscillator based on a logic inverter;

Fig. 14    presents presents an example of LM555 based oscillator with output frequency as a function of the resistance of corrosion sensing structures of the atmospheric corrosion sensor according to the invention connected in parallel with R1;

Fig. 15    presents presents an example of LM555 based oscillator with output frequency as a function of the resistance of corrosion sensing structures of the atmospheric corrosion sensor according to the invention connected in parallel with R2;

Fig. 16    presents an exemple of an electric circuit of current source controlled by resistance of corrosion sensing structure of the atmospheric corrosion sensor according to the invention;

Fig. 17    presents another exemplale of the electric circuit of current source controlled by resistance of corrosion sensing structure of the atmospheric corrosion sensor according to the invention;

Fig. 18    presents a scheme of a measurement system with distributed atmospheric corrosion sensors according to the invention and a common measurement unit;

Fig. 19    presents a scheme of a measurement system with distributed atmospheric corrosion sensors according to the invention and a common measurement unit able to demodulate signals from different sources;

Fig. 20    presents an exemple of an electric circuit of current sink with output current as a function of the resistance of corrosion sensing structures of the atmospheric corrosion sensor according to the invention;

Fig. 21    presents an exemple of an electric circuit of current source with output current as a function of the resistance of corrosion sensing structures of the atmospheric corrosion sensor according to the invention;

Fig. 22    presents an example of narrow band-pass filter with center frequency controlled by the atmospheric corrosion sensor according to the invention;

Fig. 23    presents a measurement circuit for the filter based on corrosion sensor according to the invention;

Fig. 24    presents an example of narrow band-pass filter with very high quality factor and center frequency controlled by corrosive atmospheric corrosion sensor according to the invention;

Fig. 25    presents a scheme of a measurement system with distributed narrow band-pass filters controlled by atmospheric corrosion sensors according to the invention and a common measurement unit;

Fig. 26 presents a narrow band-pass filter with center frequency as a function of the resistance of corrosion sensing structures of the atmospheric corrosion sensor according to the invention;

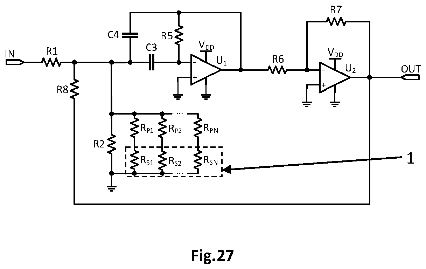

Fig. 27 presents a narrow band-pass filter with very high quality factor and center frequency as a function of the resistance of corrosion sensing structures of the atmospheric corrosion sensor according to the invention;

## Detailed description of preferred embodiments

### Embodiment 1

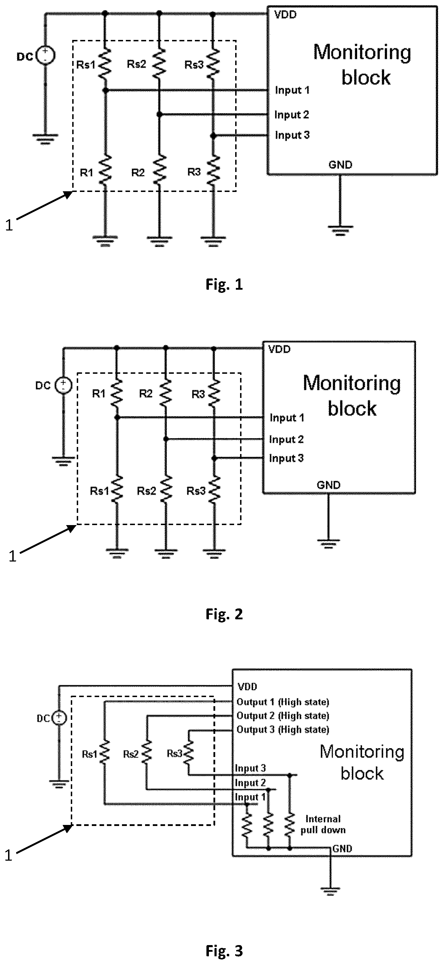

Fig. 1 shows an example circuit of a resistor divider comprising the atmospheric corrosion sensor 1 according to the invention connected to high potential.

The atmospheric corrosion sensor 1 for detecting corrosion of electrical equipment comprises three atmospheric corrosion sensing structures Rs1, Rs2, Rs3, in the form of films, placed on an insulated corrosion sensor substrate. However, other structures of the corrosion sensing structure 2 are possible e.g., metal plate. The corrosion sensing structures Rs1, Rs2, Rs3 are accessible to corrosion atmosphere. Atmospheric corrosion sensing structures Rs1, Rs2, Rs3 have the same spatial dimensions, however, each of the atmospheric corrosion sensing structures Rs1, Rs2, Rs3 comprises copper alloys with different concentration of copper. In other embodiment, corrosion sensing structures may comprise other corrodible metal alloys, in particular, alloys of aluminum, iron, zinc, nickel, silver, tin, preferably steel and brass.

Because of different concentration of copper in each of the corrosion sensing structures Rs1, Rs2, Rs3, the time necessary to create discontinuity in each of them due to corrosion process is different. Each of them will lose its continuity (internal connection) in different time, and by assessing the state of each of corrosion sensing structures Rs1, Rs2, Rs3 (that means by knowing if internal connection exists or not), it is possible to assess severity of corrosive environment in which corrosion sensor is operating. This information might be furthered used to estimate corrosion rate of the assets working in the same environment as the corrosion sensor 1, and thus allow to predict when it reaches end of operational life due to corrosion process, plan maintenance actions in advance and reduce cost of unplanned service actions due to unexpected failure.

In the present example each of corrosion sensing structures Rs1, Rs2, Rs3 act as a resistor of small value.

If the resistance of the corrosion sensing structure Rs1, Rs2, Rs3, in each of the branches, is much smaller that the resistance of the resistive component R1, R2, R3 connected to the low potential, and the corrosion sensing structure Rs1, Rs2, Rs3 are not affected by the corrosion, the voltage on the output of resistor divider is close to high potential. Once the continuity of the corrosion sensing structure Rs1, Rs2, Rs3 is lost, the resistor R1, R2, R3 connected to low potential causes that the monitoring block recognizes low state on its input, detecting the damage of the respective corrosion sensing structure located in its branch. Knowing the state of all the branches, it is possible to assess the corrosion rate of the protected device.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

In other embodiments of the atmospheric corrosion sensor 1 according to the invention resistive components R1, R2, R3 (e.g., resistors) can be connected in series to the respective corrosion sensing structures Rs1, Rs2, Rs3 and embedded in the atmospheric corrosion sensor.

### Embodiment 2

An atmospheric corrosion sensor 1 for detecting corrosion of electrical equipment as in the Embodiment 1, with the difference that each of the atmospheric corrosion sensing structures Rs1, Rs2, Rs3 comprises different corrodible materials. Corrosion sensing structure Rs1 is made of silver, Rs2 is made of copper and Rs3 of tin. In other embodiments, other combination of corrodible materials can be used, in particular, corrodible metals, metal alloys, preferably, aluminum, iron, zinc, nickel, silver, steel, or brass.

If the resistance of the corrosion sensing structure Rs1, Rs2, Rs3, in each of the branches of the circuit of a resistor divider (Fig. 1), is much smaller that the resistance of the resistive component R1, R2, R3 connected to the low potential, and the corrosion sensing structure Rs1, Rs2, Rs3 are not affected by the corrosion, the voltage on the output of resistor divider is close to high potential. Once the continuity of the corrosion sensing structure Rs1, Rs2, Rs3 is lost, the resistor R1, R2, R3 connected to low potential causes that the monitoring block recognizes low state on its input, detecting the damage of the respective corrosion sensing structure located in its branch. Knowing the state of all the branches, it is possible to assess the corrosion rate of the protected device.

Because of different chemical composition in each of the corrosion sensing structures Rs1, Rs2, Rs3, the time necessary to create discontinuity in each of them due to corrosion process is different. Each of them will lose its continuity (internal connection) in different time, and by assessing the state of each of corrosion sensing structures Rs1, Rs2, Rs3 (that means by knowing if internal connection exists or not), it is possible to assess severity of corrosive environment in which corrosion sensor is operating. This information might be furtherly used to estimate corrosion rate of the assets working in the same environment as the corrosion sensor 1, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

In other embodiments of the atmospheric corrosion sensor 1 according to the invention resistive components R1, R2, R3 (e.g., resistors) can be connected in series to the respective corrosion sensing structures Rs1, Rs2, Rs3 and embedded in the atmospheric corrosion sensor.

## Embodiment 3

Fig. 2 shows an example circuit of a resistor divider comprising the atmospheric corrosion sensor 1 according to the invention connected to lower potential. The atmospheric corrosion sensor 1 for detecting corrosion of electrical equipment comprises three atmospheric corrosion sensing structures Rs1, Rs2, Rs3 as described in embodiment 1 or 2.

In the present example corrosion sensing structures Rs1, Rs2, Rs3 are connected to lower potential, while the resistive components R1, R2, R3 of each resistor divider section are connected to high potential. If the resistance of the corrosion sensing structures Rs1, Rs2, Rs3 is much smaller than the resistance of resistors R1, R2, R3 connected to high potential, initially the monitoring block can see low state on its input, and once the corrosion sensing structures Rs1, Rs2, Rs3 are affected by the corrosion in such a way that they lose their internal connection, the monitoring device will get high state on the respective input, recognizing that the respective corrosion sensing structures Rs1, Rs2, Rs3 has been damaged due to corrosion. Knowing the state of all the branches, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

## Embodiment 4

Fig. 3 shows an example electric circuit comprising atmospheric corrosion sensor 1 for detecting corrosion of electrical equipment comprising three atmospheric corrosion sensing structures Rs1, Rs2, Rs3 as described in embodiment 1 or 2.

The corrosion sensing structures Rs1, Rs2, Rs3 of the atmospheric corrosion sensor 1 according to the invention are connected between dedicated outputs and inputs of the monitoring block. The outputs of the monitoring block have a default high state and the inputs are equipped with internal pull-down circuit (i.e. resistor or transistor). As long as, the corrosion sensing structures Rs1, Rs2, Rs3 keep continuity inside, the state on the input will be high, and it will switch to low once the continuity in corrosion sensing structures Rs1, Rs2, Rs3 is broken due to corrosion.

Knowing the state of all the inputs, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

## Embodiment 5

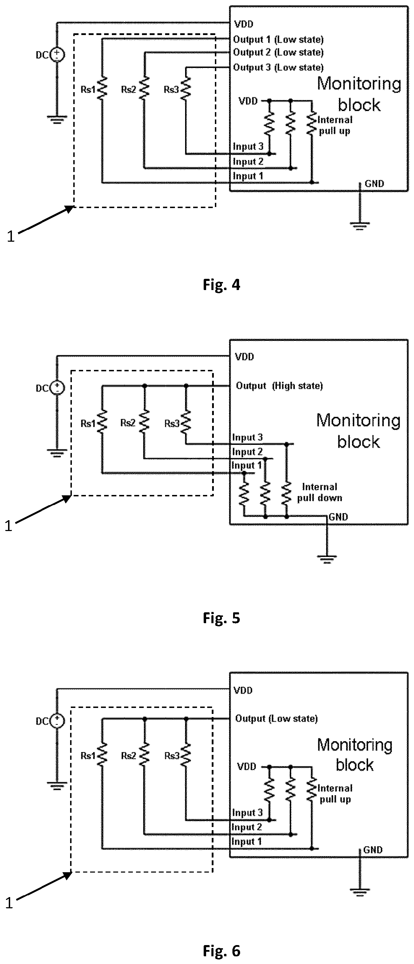

Fig. 4 shows an example electric circuit comprising atmospheric corrosion sensor 1 for detecting corrosion of electrical equipment comprising three atmospheric corrosion sensing structures Rs1, Rs2, Rs3 as described in embodiment 1 or 2.

The corrosion sensing structures Rs1, Rs2, Rs3 of the atmospheric corrosion sensor 1 according to the invention are connected between dedicated outputs and inputs of the monitoring block. The outputs of the monitoring block have a default low state and the inputs are equipped with internal pull-up circuit. As long as, the corrosion sensing structures Rs1, Rs2, Rs3 keep continuity inside, the state on the input will be low, and it will switch to high once the continuity in corrosion sensing structures Rs1, Rs2, Rs3 is broken due to corrosion.

Knowing the state of all the inputs, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

## Embodiment 6

Fig. 5 shows an example electric circuit comprising atmospheric corrosion sensor 1 for detecting corrosion of electrical equipment comprising three atmospheric corrosion sensing structures Rs1, Rs2, Rs3 as described in embodiment 1 or 2.

The corrosion sensing structures Rs1, Rs2, Rs3 of the atmospheric corrosion sensor 1 according to the invention are connected between a common output and dedicated inputs of the monitoring block. The output of the monitoring block has a default high state, and the inputs are equipped with internal pull-down circuit. As long as, the corrosion sensing structures Rs1, Rs2, Rs3 keep continuity inside, the state on the input will be high, and it will switch to low once the continuity in corrosion sensing structures Rs1, Rs2, Rs3 is broken due to corrosion.

Knowing the state of all the inputs, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

## Embodiment 7

Fig. 6 shows an example electric circuit comprising atmospheric corrosion sensor 1 for detecting corrosion of electrical equipment comprising three atmospheric corrosion sensing structures Rs1, Rs2, Rs3 as described in embodiment 1 or 2.

The corrosion sensing structures Rs1, Rs2, Rs3 of the atmospheric corrosion sensor 1 according to the invention are connected between a common output and dedicated inputs of the monitoring block. The output of the monitoring block has a default low state, and the inputs are equipped with internal pull-up circuit. As long as, the corrosion sensing structures Rs1, Rs2, Rs3 keep continuity inside, the state on the input will be low, and it will switch to high once the continuity in corrosion sensing structures Rs1, Rs2, Rs3 is broken due to corrosion.

Knowing the state of all the inputs, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

**Embodiment 8**

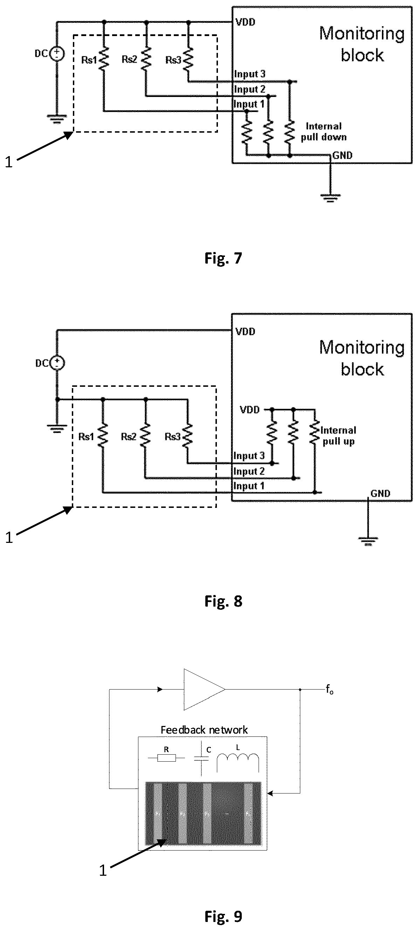

Fig. 7 shows an example electric circuit comprising atmospheric corrosion sensor 1 for detecting corrosion of electrical equipment comprising three atmospheric corrosion sensing structures Rs1, Rs2, Rs3 as described in embodiment 1 or 2.

The corrosion sensing structures Rs1, Rs2, Rs3 of the atmospheric corrosion sensor 1 according to the invention are connected between a stable high potential and dedicated inputs of the monitoring block, wherein the inputs are equipped with internal pull-down circuit. As long as, the corrosion sensing structures Rs1, Rs2, Rs3 keep continuity inside, the state on the input will be high, and it will switch to low once the continuity in corrosion sensing structures Rs1, Rs2, Rs3 is broken due to corrosion.

Knowing the state of all the inputs, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

**Embodiment 9**

Fig. 8 shows an example electric circuit comprising atmospheric corrosion sensor 1 for detecting corrosion of electrical equipment comprising three atmospheric corrosion sensing structures Rs1, Rs2, Rs3 as described in embodiment 1 or 2.

The corrosion sensing structures Rs1, Rs2, Rs3 of the atmospheric corrosion sensor 1 according to the invention are connected between a stable low potential and dedicated inputs of the monitoring block, wherein the inputs are equipped with internal pull-up circuit. As long as, the corrosion sensing structures Rs1, Rs2, Rs3 keep continuity inside, the state on the input will be low, and it will switch to high once the continuity in corrosion sensing structures Rs1, Rs2, Rs3 is broken due to corrosion.

Knowing the state of all the inputs, it is possible to assess severity of corrosive environment in which corrosion sensor is operating; this information might be further used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

The information about each of the inputs of monitoring block can be combined, for example as a single digital word where each bit provide information about respective input - this allows for information compression, while enables easy assessment of the state of each of the corrosion sensing structure and of the state of its combination, which is respective to corrosion progress on each of the corrosion sensing structure and can be converted to information on corrosion rate reaching multiple thresholds.

**Embodiment 10**

An oscillator circuit for corrosion detection comprising the atmospheric corrosion sensors 1 for detecting corrosion of electrical equipment comprising plurality of corrosion sensing structures as described in embodiment 1 or 2. Corrosion sensing structures denoted on Fig. 9 as Fn are connected to a plurality of reactive components of the oscillator circuit (R - resistors, C - capacitors, L - inductors) and forms part of the oscillator feedback network.

Corrosion sensing structures Fn of said atmospheric corrosion sensor 1 are exposed to corrosive atmosphere and disconnect reactive components from said oscillator circuit. Once electrical continuity of the corrosion sensing structures Fn is broken due to corrosion, the output frequency $f_o$ of the oscillator changes because the topology of its feedback network changes as well.

Initially, all corrosion sensing structures Fn provide an electrical continuity so they can be represented by short circuits. Due to corrosion process, the structures are degraded until their continuity is broken. In this case they can be represented by open circuits. The corrosion sensing structures have the same spatial dimensions but different composition of the corrodible material, so the time needed to break each structure due to corrosion is different.

Two implementations of an oscillator comprising atmospheric corrosion sensor 1, wherein corrosion sensing structures are represented by fuse symbols Fon Fig. 9-13, are proposed.

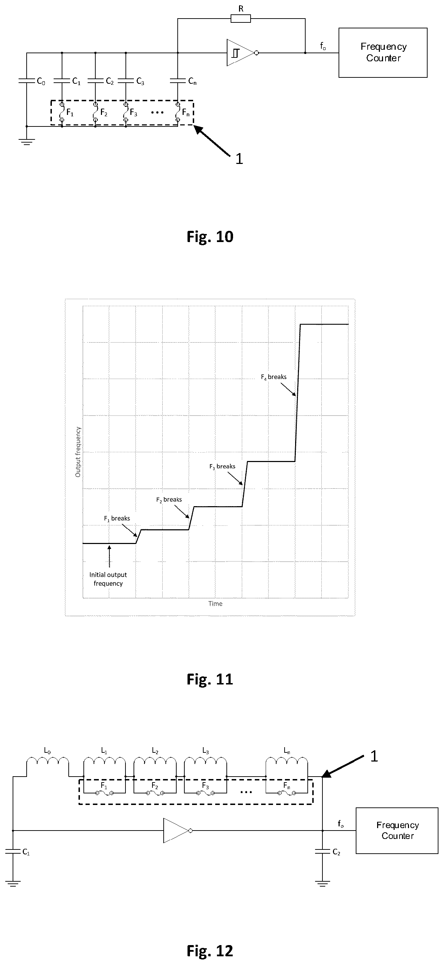

First is a well-known RC oscillator based on a single Schmitt trigger inverter gate, shown in Fig. 10. It uses a single resistor R and multiple capacitors in the feedback network. Capacitor $C_0$ is permanently connected to the inverter input, meanwhile capacitors $C_1, C_2, C_3, ..., C_n$ will be disconnected when the electrical continuity of corrosion sensing structures $F_1, F_2, F_3, ..., F_n$ breaks.

The output frequency $f_o$ of the oscillator can be calculated by using the following formulas [1], [2]:

$$f_o = \frac{1}{RC \ln\left[\left(\frac{V_{cc}-V_{T-}}{V_{cc}-V_{T+}}\right)\left(\frac{V_{T+}}{V_{T-}}\right)\right]} \qquad [1]$$

$$C = C_0 + \delta_1 C_1 + \delta_2 C_2 + \delta_3 C_3 + \cdots + \delta_n C_n \qquad [2]$$

$$\delta_i = \begin{cases} 1, if\ F_i\ is\ shorted \\ 0, if\ F_i\ is\ broken \end{cases}$$

where: $V_{cc}$ is the supply voltage for the Schmitt inverter, $V_{T-}$ and $V_{T+}$ are negative-going and positive-going input threshold voltages

Since the output frequency $f_o$ is inversely proportional to the feedback capacitance, it will increase stepwise once the fuses start to disconnect the capacitors. An example output frequency change in time due to corrosion of sensing structures is depicted in Fig. 11. It is assumed that capacitors $C_0, ..., C_n$ have the same values. The output frequency is as an indicator of the ongoing corrosion and can be measured by a frequency counter, easy to implement in most of the programmable logic devices and microcontrollers used nowadays.

The second implementation is an example of a well-known Colpitts oscillator based on a logic inverter gate, shown in Fig. 12. The feedback network comprises two capacitors, $C_1$ and $C_2$, connected to the input and output of the gate respectively. The path between the input and output of the gate is closed by multiple inductors connected in series. The inductor $L_0$ is connected permanently, meanwhile inductors $L_1, L_2, L_3, ..., L_n$ are shorted by corrosion sensing structures $F_1, F_2, F_3, ..., F_n$. Once the corrosion sensing structures $F_i$ breaks, the inductance of $L_i$ is added to the total feedback inductance of the oscillator.

The output frequency $f_o$ of the oscillator can be calculated by using the following formulas [3], [4]:

$$f_o = \frac{1}{2\pi\sqrt{L\left(\frac{C_1 C_2}{C_1+C_2}\right)}} \qquad [3]$$

$$L = L_0 + \delta_1 L_1 + \delta_2 L_2 + \delta_3 L_3 + \cdots + \delta_n L_n \qquad [4]$$

$$\delta_i = \begin{cases} 0, if\ F_i\ is\ shorted \\ 1, if\ F_i\ is\ broken \end{cases}$$

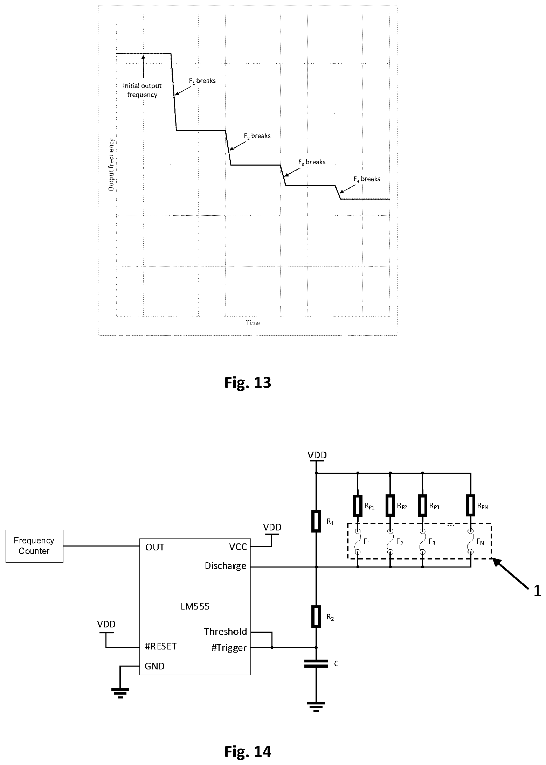

Since the output frequency is inversely proportional to the square root of the feedback inductance, it will decrease stepwise once the fuses Fi start to break and the inductances start to add. An example output frequency change in time due to corrosion of sensing structures is depicted in Fig. 13. It is assumed that $L_0, ..., L_n$ have the same values. Same as in the previous implementation example, the output frequency fo is as an indicator of the ongoing corrosion and can be measured by a frequency counter, easy to implement in most of the programmable logic devices and microcontrollers used nowadays.

**Embodiment 11**

An oscillator circuit for corrosion detection with an integrated circuit of LM555 timer comprising the atmospheric corrosion sensor 1 comprising plurality of corrosion sensing structures as described in the embodiment 1 or 2.

Two implementations of an oscillator with an integrated circuit of LM555 timer atmospheric corrosion sensor 1, wherein corrosion sensing structures Rs1-RsN are represented by fuse symbols $F_1...F_N$ on Fig. 14-15, are proposed.

According to first implementation presented in Fig. 14, arrangements of corrosion sensing structures $F_1...F_N$ of

the atmospheric corrosion sensor 1 connected in series with a plurality of resistors $R_{P1}$-$R_{PN}$ are connected in-parallel with resistor R1.

The equivalent resistance is given by the following formula [5]:

$$\frac{1}{R_1'} = \frac{1}{R_1} + \delta_1\frac{1}{R_{P1}} + \delta_2\frac{1}{R_{P2}} + \delta_3\frac{1}{R_{P3}} + \cdots + \delta_N\frac{1}{R_{PN}} \qquad [5]$$

$$\delta_i = \begin{cases} 1, if\ F_i\ is\ shorted \\ 0, if\ F_i\ is\ broken \end{cases}$$

The output frequency $f_o$ of the oscillator can be calculated as follows [6]:

$$f_o = \frac{1.44}{(R_1'+2R_2)C} \qquad [6]$$

It can be seen, that the output frequency $f_o$, which is inversely proportional to the equivalent resistance $R_1'$, will be decreasing stepwise with the progress of corrosion.

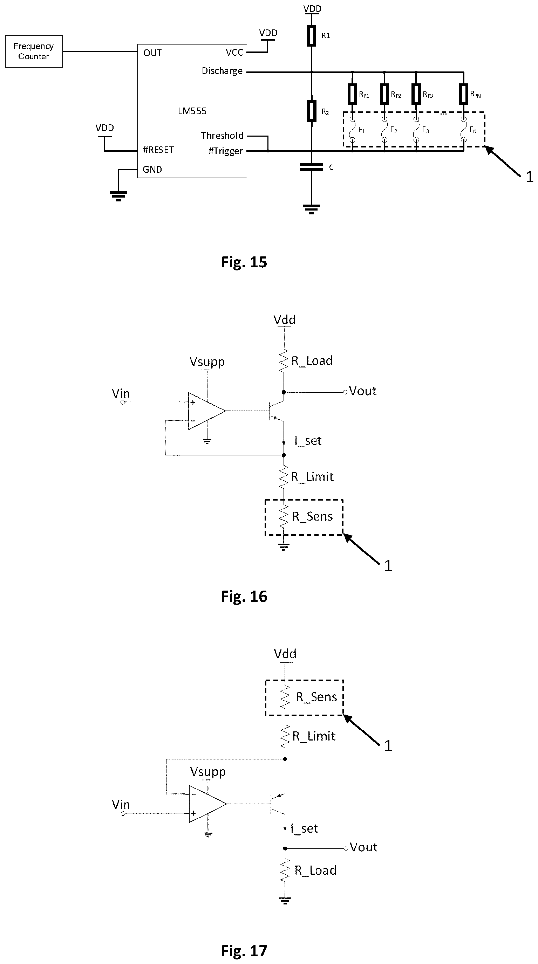

According to second implementation of embodiment 11 presented in Fig. 15, arrangements of corrosion sensing structures $F_1...F_N$ connected in series with resistors $R_{P1}...R_{PN}$ are connected in-parallel with resistor $R_2$. The equivalent resistance is given by the following formula [7]:

$$\frac{1}{R_2'} = \frac{1}{R_2} + \delta_1\frac{1}{R_{P1}} + \delta_2\frac{1}{R_{P2}} + \delta_3\frac{1}{R_{P3}} + \cdots + \delta_N\frac{1}{R_{PN}} \qquad [7]$$

$$\delta_i = \begin{cases} 1, if\ F_i\ is\ shorted \\ 0, if\ F_i\ is\ broken \end{cases}$$

The output frequency $f_o$ of the oscillator can be calculated as follows [8]:

$$f_o = \frac{1.44}{(R_1+2R_2')C} \qquad [8]$$

It can be seen, that the output frequency $f_o$, which is inversely proportional to the equivalent resistance $R_2'$, will be decreasing stepwise with the progress of corrosion.

**Embodiment 12**

An electric circuit of current source comprising a sensing element *R_sens in the form of an* atmospheric corrosion sensor 1 comprising plurality of corrosion sensing structures as described in embodiment 1 or 2.

The corrosion sensing structures of the sensing element *R_sens* controls the current *I_set* of the current source. The resistance of corrosive element *R_sens* is used to set the value of the current source *I_set,* thus the current at the output of the source changes together with the resistance of the sensing element *R_sens.* The changing resistance is reflected in a changes of output current of the current source controlled by the corrosion sensing structures.

Additional resistor *R_limit* can be used in series with the sensing element *R_sens* so that the current can be limited to reasonable values even if the resistance of the sensing element *R_sens* is very small.

Two implementations of such a circuit are proposed.

First implementation presented in Fig. 16 revels a circuit with fixed supply *Vdd* and fixed value of the control voltage *Vin.*

The output current value *I_set* can be calculated by the following formula [9]:

$$\text{I\_set} = \frac{Vin}{R_{sens}+R\_limit} \qquad [9]$$

It is possible as well to calculate the voltage output *Vout* on a load resistor *R_load* by the following formula [10]:

$$\text{Vout} = Vdd - \frac{Vin}{R_{sens}+R\_limit} * R\_load \qquad [10]$$

Another example of implementation is presented in Fig. 17.

The output current value *I_set* can be calculated by the following formula [11]:

$$I\_set = \frac{Vdd-Vin}{R_{sens}+R\_limit} \qquad [11]$$

It is possible as well to calculate the voltage output *Vout* on a load resistor *R_load* by the following formula [12]:

$$\text{Vout} = \frac{Vdd-Vin}{R_{sens}+R\_limit} * R\_load \qquad [12]$$

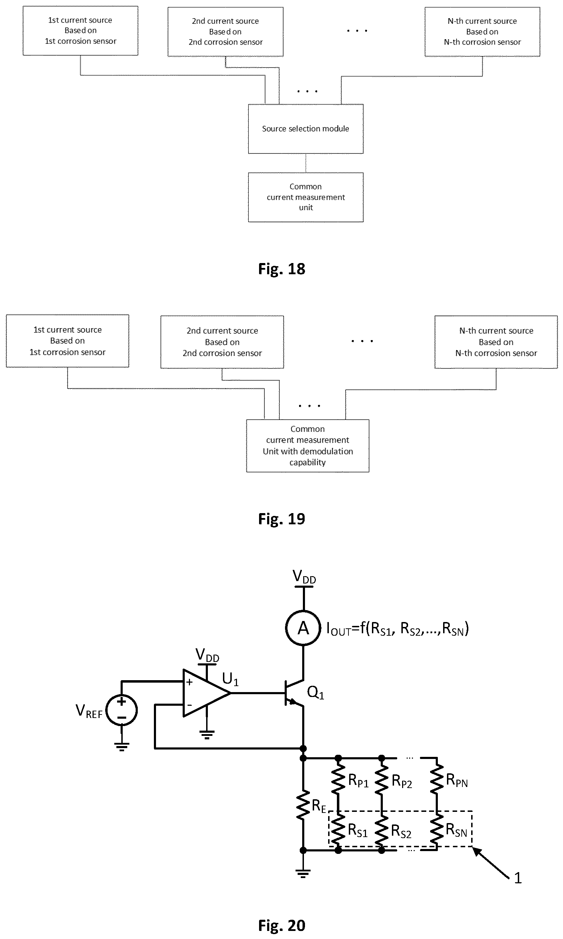

What is more, as the output signal of the current source is not affected by the length of the wires, it is possible to combine many of such electric circuits of the current source comprising a sensing element *R_sens* in the form of atmospheric corrosion sensor 1 with a single measurement unit which is able to measure the current produced by a single source (for example, a measurement card which accepts signal range 4-20 mA). This way it is possible to build a measurement system with distributed sensors and a common measurement unit, as it is shown in Fig. 18.

Furthermore, it is possible to connect such electric circuits of the current source comprising a sensing element *R_sens* in the form of atmospheric corrosion sensor 1, together, and apply modulation to every *Vin* signal with different carrier frequency. In this case, the measurement unit can demodulate and extract corrosion data from combined signals so there is no need to use the source selection module, as it is shown in Fig. 19.

**Embodiment 13**

A present embodiment relates to a current sink circuit comprising atmospheric corrosion sensor 1 according to embodiments 1 or 2. Corrosion sensing structures Rs1-RsN of atmospheric corrosion sensor 1 are in the form of resistors presented in Fig.20. An emitter resistor $R_E$ is connected in parallel with arrangements of corrosion sensing structures Rs1-RsN connected in series with fixed resistors $R_{P1}...R_{PN}$.

In this case corrosion sensing structures Rs1-RsN of the atmospheric corrosion sensor 1 are intended to act as electronic fuses representing very low resistance in the initial state and very high resistance after being corroded.

The equivalent resistance of the network can be expressed by the following formula [13]:

$$\frac{1}{R_E'} = \frac{1}{R_E} + \frac{1}{R_{P1}+R_{S1}} + \frac{1}{R_{P2}+R_{S2}} + \cdots + \frac{1}{R_{PN}+R_{SN}} \qquad [13]$$

The output current $I_{OUT}$ can be calculated using the following formula [14]:

$$I_{OUT} = \frac{V_{REF}}{R_E'} \qquad [14]$$

wherein: $V_{REF}$ is the voltage reference to the current source with which the initial current can be set according to needs The output current, which is inversely proportional to the equivalent resistance $R_E'$, will be decreasing stepwise with the progress of corrosion.

**Embodiment 14**

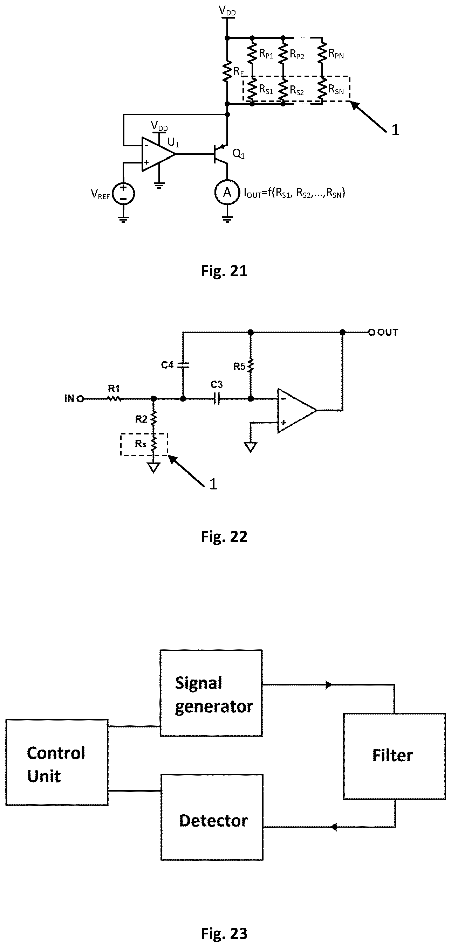

A present embodiment relates to a current source circuit comprising atmospheric corrosion sensor 1 according to embodiments 1 or 2. Corrosion sensing structures Rs1-RsN of atmospheric corrosion sensor 1 in the form of resistors presented in Fig.21. An emitter resistor $R_E$ is connected in parallel with arrangements of corrosion sensing structures Rs1-RsN connected in series with fixed resistors $R_{P1}...R_{PN}$.

In this case corrosion sensing structures Rs1-RsN of the atmospheric corrosion sensor 1 are intended to act as electronic fuses representing very low resistance in the initial state and very high resistance after being corroded.

The equivalent resistance of the network can be expressed by the following formula [15]:

$$\frac{1}{R_E'} = \frac{1}{R_E} + \frac{1}{R_{P1}+R_{S1}} + \frac{1}{R_{P2}+R_{S2}} + \cdots + \frac{1}{R_{PN}+R_{SN}} \qquad [15]$$

The output current $I_{OUT}$ can be calculated using the following formula [16]:

$$I_{OUT} = \frac{V_{DD}-V_{REF}}{R_E'} \qquad [16]$$

wherein: $V_{REF}$ is the voltage reference to the current source with which the initial current can be set according to needs The output current, which is inversely proportional to the equivalent resistance $R_E'$, will be decreasing stepwise with the progress of corrosion.

**Embodiment 15**

A present embodiment relates to a narrow band-pass filter comprising atmospheric corrosion sensor 1 as described in embodiments 1 or 2. Corrosion sensing structures are used to control center frequency of the narrow band-pass filter. Resistance of the corrosion sensing structures is used to set the center frequency of the narrow band-pass filter. Thus, the center frequency of the filter changes due to the changes of the resistance of the atmospheric corrosion sensor 1.

Fig. 22 presents a multiple feedback narrow band-pass filter. Corrosion sensing structures of the atmospheric corrosion sensor 1, denoted on Fig. 22 as Rs, are connected in series with R2.

The center frequency is given by the following formula [17]:

$$f_0 = \frac{1}{2*\pi} * \sqrt{\frac{1}{R5*C3*C4} * \left(\frac{1}{R1} + \frac{1}{R2+Rs}\right)} \qquad [17]$$

The sensing element could be as well connected in series with R1 or R5, and then in the equation above should be changed properly.

To check the center frequency of the narrow band-pass filter controlled by the corrosion sensor 1, signals of various frequencies must be generated and passed through the filter. The control unit which knows the transmitted frequency and amplitude of the signal received by the detector, might calculate the change of the sensing element resistance and basis on that provide information about corrosion progress. Fig. 23 presents a measurement circuit for the filter based on corrosion sensor 1.

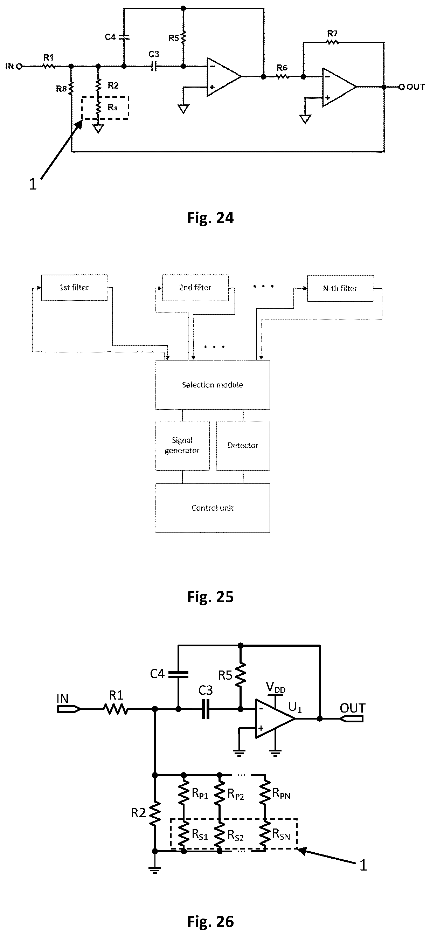

Single stage filter like the one presented in Fig.22 usually have quality factor below 20, so its pass-band might be too wide. To get even narrower characteristic of the filter, it is possible to modify it by adding a second operational amplifier, as shown on Fig. 24, which enables increasing quality factor (Q) even to values of few hundreds, thus enabling much narrower bandwidth.

Furthermore, it is also possible to combine many of sensors based on filter with a single measurement unit which is able to measure the frequency response of a single filter. This way it is possible to build a measurement system with distributed sensors and a common measurement unit, as it is shown in Fig. 25.

**Embodiment 16**

A present embodiment relates to a narrow band-pass filter comprising atmospheric corrosion sensor 1 according to embodiments 1 or 2. Corrosion sensing structures $R_{S1}...R_{SN}$ of atmospheric corrosion are in the form of resistors $R_{S1}...R_{SN}$ presented in Fig. 26. A narrow band-pass filter circuit comprises a resistor $R_2$ connected in parallel with arrangements of corrosion sensing structures $R_{S1}...R_{SN}$ connected in series with fixed resistors $R_{P1}...R_{PN}$.

In this case the corrosion sensing structures $R_{S1}...R_{SN}$ are intended to act as electronic fuses representing very low resistance in the initial state and very high resistance after being corroded.

The equivalent resistance of the network can be expressed by the following formula [18]:

$$\frac{1}{R_2'} = \frac{1}{R_2} + \frac{1}{R_{P1}+R_{S1}} + \frac{1}{R_{P2}+R_{S2}} + \cdots + \frac{1}{R_{PN}+R_{SN}} \qquad [18]$$

The center frequency $fo$ of the filter is given by the following equation [19]:

$$f_0 = \frac{1}{2\pi\sqrt{(R_1\|R_2')R_5C_3C_4}}$$  [19]

The center frequency *fo*, which depends upon $R_2'$, will be decreasing stepwise with the progress of corrosion.

Similar corrosion sensing structures network can also be incorporated in a high-quality factor narrow band-pass filter circuit, in order to obtain narrower frequency response, as shown in Fig. 29. The center frequency of the filter depends upon the equivalent resistance of the corrosion sensing structures network and will change stepwise with the progress of corrosion.

**Claims**

**1.** An atmospheric corrosion sensor (1) for detecting corrosion of electrical equipment comprising at least two atmospheric corrosion sensing structures (Rsl, Rs2, Rs3) placed on at least one insulated corrosion sensor substrate, wherein said corrosion sensing structures (Rsl, Rs2, Rs3) are accessible to corrosion atmosphere **characterized in that** said atmospheric corrosion sensing structures (Rsl, Rs2, Rs3) have the same spatial dimensions and each of said atmospheric corrosion sensing structures (Rsl, Rs2, Rs3) comprises different composition of corrodible material.

**2.** The atmospheric corrosion sensor (1) according to claim 1 **characterized in that** each of said atmospheric corrosion sensing structures (Rsl, Rs2, Rs3) comprises different concentration of the same chemical composition of corrodible material.

**3.** The atmospheric corrosion sensor (1) according to claim 1 **characterized in that** each of said atmospheric corrosion sensing structures (Rsl, Rs2, Rs3) comprises a different chemical composition of corrodible material.

**4.** The atmospheric corrosion sensor according to any of the preceding claims **characterized in that** corrodible material is corrodible metal or metal alloy, in particular copper, aluminum, iron, zinc, nickel, silver, tin, steel, or brass.

**5.** The atmospheric corrosion sensor according to any of the preceding claims **characterized in that** corrosion sensing structure (Rsl, Rs2, Rs3) is made in the form of film.

**6.** The atmospheric corrosion sensor according to any of the preceding claims **characterized in that** each of the corrosion sensing structure (Rsl, Rs2, Rs3) is connected in series to a resistive component (R1, R2, R3), respectively.

**6.** A set of atmospheric corrosion sensors (1) according to any of the claims 1 to 6.

**7.** An electrical equipment for corrosion detection comprising at least one of the atmospheric corrosion sensors (1) according to any the claims 1 to 6 or at least one set of atmospheric corrosion sensors (1) according to claim 7.

Fig. 1

Fig. 2

Fig. 3

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

**Fig. 25**

**Fig. 26**

**Fig.27**

Europäisches
Patentamt

European
Patent Office

Office européen
des brevets

**EUROPEAN SEARCH REPORT**

Application Number

EP 23 20 5879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 004 770 A (STATE GRID CORP CHINA ET AL.) 28 October 2015 (2015-10-28) | 1-6 | INV.<br>G01N17/00 |
| Y | * paragraphs [0001], [0023], [0028], [0029] * | 7,8 | G01N17/02<br>G01N27/26 |
| X | CN 106 226 226 A (ELECTRIC POWER RES INST OF STATE GRID SHANDONG ELECTRIC POWER CO ET AL) 14 December 2016 (2016-12-14) | 1-6 | |
| Y | * paragraphs [0001], [0025], [0026]; figure 1 * | 7,8 | |
| X | US 5 306 414 A (GLASS ROBERT S [US] ET AL) 26 April 1994 (1994-04-26)<br>* column 4 - column 6; figures 1, 2 * | 1-8 | |
| Y | MULLER ET AL: "CONTROL OF CORROSIVE GASES TO AVOID ELECTRICAL EQUIPMENT FAILURE", 20031204<br><br>,<br>4 December 2003 (2003-12-04), pages 1-13, XP008158360,<br>Retrieved from the Internet:<br>URL:www2.purafil.com/Literature/Control_of _Corrosive<br>_Gases_to_Avoid_Electrical_Equipment_Failu re.pdf<br>[retrieved on 2024-04-05] | 8 | |
| A | * abstract * | 1-7 | |

TECHNICAL FIELDS
SEARCHED (IPC)

G01N

The present search report has been drawn up for all claims

| Place of search | Date of completion of the search | Examiner |
|---|---|---|
| The Hague | 8 April 2024 | Martin, Hazel |

EPO FORM 1503 03.82 (P04C01)

## ANNEX TO THE EUROPEAN SEARCH REPORT
## ON EUROPEAN PATENT APPLICATION NO.

EP 23 20 5879

This annex lists the patent family members relating to the patent documents cited in  the above-mentioned European search report.
The members are as contained in the European Patent Office EDP file on
The European Patent Office is in no way liable for these particulars which are merely given for the purpose of information.

08-04-2024

| Patent document cited in search report | | Publication date | Patent family member(s) | | Publication date |
|---|---|---|---|---|---|
| CN 105004770 | A | 28-10-2015 | NONE | | |
| CN 106226226 | A | 14-12-2016 | NONE | | |
| US 5306414 | A | 26-04-1994 | US 5306414 A | | 26-04-1994 |
| | | | US 5437773 A | | 01-08-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8723534 B2
- US 8390306 B2
- US 20230134944 A1